# EUROPEAN PATENT SPECIFICATION

(11) **EP 0 467 444 B1**
(45) Date of publication and mention of the grant of the patent: **18.06.1997**
(21) Application number: 91201737.3
(22) Date of filing: 05.07.1991
(51) Int. Cl.: D03C 1/00, F16D 11/00

(54) **Actuation device for the programming of rotary dobbies in looms**
Steuervorrichtung zum Programmieren von Rotationsschaftmaschinen für Webmaschinen
Dispositif d'actionnement pour la programmation des ratières rotatives sur métiers à tisser

(30) Priority: 20.07.1990 IT 2100890; 14.12.1990 IT 2238790
(43) Date of publication of application: 22.01.1992
(73) Proprietor: BREVTEX SA, CH-6534 San Vittore/GR (CH)
(72) Inventor: Beretta, Giovanni, Imola (Bologna) (IT)
(74) Representative: Raimondi, Alfredo, Dott. Ing. Prof.

(56) References cited:
- EP-A- 0 047 791
- EP-A- 0 239 514
- FR-A- 2 398 229

## Description

The subject of the present invention is an actuation device for the programming of rotary dobbies for actuating heddle frames in looms.

As is known, the positioning of the frames of the heddles in a loom, determining the weft of the finished fabric, must be programmed according to a predetermined sequence which predicts the position that each frame must adopt at each revolution of the main shaft, to which are firmly attached the oscillating devices which actuate said frames for the purpose of achieving the movement into one of the two desired positions, high or low.

Because the main shaft is actuated in accordance with an intermittent cycle with a dead point at each half-revolution of 180°, the governing and control device must, in correspondence with each stop of the main shaft, be capable of making the rotary shaft locked to, or disengaged from, an eccentric or similar device which actuates the movement lever mechanisms for the frames, thereby determining for them, in one case, the change of position and, in the other case, the maintenance of the preceding position. Such dobbies must, therefore, be controlled by appropriate actuation devices for the programming adapted for determining, by means of suitable actuators, the variation in the relative positions of governing means which, in their turn, will cause the position of the frames to vary.

Solutions are known in the art, which provide the use of devices for actuating the programming which, however, suffer from many disadvantages, including the need for stopping the shaft at every half-revolution in order to have available the time necessary for cancelling out the preceding programming and replacing it by a new one for the next half-revolution: a device of this type is known, for instance, from EP 0 234 321, which illustrates a rack device engaging with selection levers actuated and/or restored by a spring and by an electromagnet.

Another example of the known art above mentioned is disclosed into EP-A- 0 047 791.

It is clear that programming devices of this type cause sn increase in the dead times of the machine, at the expense of the useful working time.

Another type of disadvantage that may be encountered in the devices of known type, which provide for a single control with pressure times synchronized with the centre-line of the movement diagram both for forward movement and backward movement, is represented by the high probability of errors in the selection of the movement in the clockwise or counterclockwise direction, it being also obligatory with such devices to carry out some half-revolutions idling in order to find the weft and to re-establish the correct reading pitch.

The technical problem therefore arises of creating an actuating device for the programming, especially for rotary dobbies for controlling looms, which shall make possible the selection of the position of the heddle frames without stopping the rotation of the main shaft at each half-revolution, with consequent increase in the speed of working and reduction in the dead times of the machine; which shall make possible an independent selection of the frames by the rotation in clockwise and anticlockwise direction, in this way reducing the possibility of errors and eliminating the need for idling half-revolutions for the purpose of re-establishing the correct reading pitch in the Case where the weft is to be picked up again following errors or breakages. The device must, moreover, be such as to apply a reduced loading on the warp threads, and also reduced forces and loadings on the elements of the dobby for the purpose of making possible very high operating speeds, but also such as to make the power consumption as low as possible.

Said results are achieved by the present invention, which provides an actuation device for the programming of rotary dobbies for actuating the heddle frames of looms, which dobbies comprise a first and a second pair of levers, firmly pivoted on a rotating eccentric ring, one free end of said first pair of levers being adapted for engaging with the rotating disc, said device comprising a selection lever, rotatable about a fixed pivot under the action exerted by pressure bars acting on thrust means articulated to one end of said lever and in opposition to the action exerted in the opposite direction by thrust means fixed to the end of said lever on the opposite side of the pivot point, for the purpose of positioning projections of the selection lever along - or outside - the path followed by the outer end of the lever during one half-revolution, and with which to enter - or not to enter - into contact, for the purpose of determining - or not - a rotation of said lever such as to cause - or not to cause - the engagement of its outer ends with the rotating disc for the purpose of determining - or not determining - the variation in the position of the frame, said rotation of the selection lever being effected during the rotation of the governing shaft and being maintained by positioning and blocking means associated with said thrust means, in this way making it possible to carry out the programming of the dobby for the next half-revolution during the half-revolution in progress and without stopping the governing shaft.

The invention is claimed in Claim 1, with further particular features in claims 2-5.

Further details will become apparent from the following description, with reference to the attached drawings, in which there are shown:
- in Figure 1:: a partial schematic section through the actuation device for programming according to the present invention, in the start of cycle condition;
- in Figure 2:: the device of Fig. 1 during the half-revolution of the shaft and in the phase of actuation of programming;
- in Figure 3:: the device of Fig. 1 at the end of a half-revolution and with programming for the next half-revolution carried out;
- in Figure 4:: the device of Fig. 1 in the event of programming opposite to that of Fig. 3;
- in Figure 5:: the device of Fig. 1 at the start of a half-revolution, starting from an initial position opposite to that of Fig. 1 and in the actuation phase of programming;
- in Figure 6:: the device of Fig. 5 with programming occurring and
- in Figure 7:: an enlarged, detailed schematic section of the selection and blocking means for the programming,
- in Figure 8:: a partial schematic view in section of an example of embodiment as a variant of the device according to this invention in at-rest conditions and
- in Figure 9:: the device of Fig. 8 at the instant of actuation of programming,
- in Figure 10:: the device of Fig. 8 at the instant of actuation of programming for maintenance of position at the end of a further half-revolution;
- in Figure 11:: the device of Fig. 10, but with programming for varying the position of the frame.

As illustrated in the figures, a device for controlling heddles is composed of a rotary shaft 1, on which is keyed a disc 2, revolving integrally with the shaft and equipped with two diametrally opposite notches 2a and 2b; on the side of said disc 2 there is concentrically mounted a bearing 3, on which an eccentric ring 4 can revolve, the outer, circumferential surface of which ring is eccentric with respect to the shaft 1 and has a sliding surface 5, which allows the rotation of an oscillating body 4a connected to an extension 4b, pivoted on the actuating bar 6 of the frame of the loom, not illustrated in the figure.

A ring 7, concentric with the slide surface 5, is also fixed laterally to the oscillating body 4a and this ring has two inwardly facing notches 7a of substantially trapezoidal shape, diametrally opposite each other on its internal surface, and basically circular arc-shaped notches 7b facing outwards.

The device of this invention comprises, furthermore, a first pair of levers 9 and 10, connected to the eccentric ring 4 by the pivots 9a and 10a respectively, and a second pair of levers 13 and 14, these being attached to the eccentric ring 4 at the respective end pivots 13a and 14a.

The levers of said first pair have the two free ends, facing inwards and respectively equipped with a radially orientated tooth 9b and 10b, and also a set of cylindrical gear teeth 9c and 10c respectively, orientated tangentially; said sets of teeth are adapted for engaging with each other, in this way forming a single radial tooth 17, having twice the width of the two teeth 9b and 10b, and adapted for engaging with the notches 2a or 2b of the disc 2. Said tooth 17 has, moreover, sides suitably shaped for obtaining optimum positioning and engagement with the notches 2a and 2b. The other free end of each lever 9, 10 is, in contrast, adapted for receiving a thrust command from an actuation device 18 for the programme and for sliding freely on the front annular surface of the oscillating body 4a in the case in which the levers 9 and 10 are in engagement with the notch 2a, 2b of the disc 2, or for engaging with the circular-shaped notch 7b of the ring 7 under the thrust action of the programmer 18.

The levers 13 and 14 of said second pair have, in turn, an inner free end shaped as a set of cylindrical gear teeth 13b and 14b, orientated substantially tangentially and adapted for engaging with each other; said end possesses, in addition, an upper tooth 13c and 14c, adapted for engaging radially into the notch 7a of the ring 7. In this way, the rotational action imparted to one of the two levers of each pair compels a corresponding rotation in the opposite direction of the other lever. In the example illustrated in the figures, both the pairs of levers 9, 10; 13, 14 have an auxiliary spring or the like 11 and 15, respectively, disposed in a chordal direction; the ends of each spring being attached to the levers of the same pair. Said springs exert a restoring action which promotes rotation in the radial centripetal direction of the levers of the first pair and centrifugal radial rotation of the levers of the second pair.

Said actuation device for programming 18 according to the present invention is composed of a selection lever 19, rotatable about a fixed pivot 19a, and equipped with two end projections, respectively 19b and 19c, facing towards the centre of rotation of the shaft 1. The surface of the end of said lever 19 opposite the projection 19b is attached to a spring 20, compressed in a fixed seating 20a and adapted for causing, by the effect of its own extension, rotation of the projection 19b of the selection lever 19 towards the centre of the shaft 1; in correspondence with the other end 19d of the selection lever 19, but on the opposite side from the projection 19c, there are articulated two thrust rods 21, 22, orientated substantially radially with respect to the circumference of the shaft 1, along which direction they can also move in translation as a consequence of the action exerted by appropriate thrust means, described in more detail below.

In correspondence with the fixed pivot 19a of the selection lever 19 there is pivoted a first transverse lever 24 connected, by means themselves known and indicated only schematically in the figure by a broken line 24a, to a second lever 25, rotatable about a fixed pivot 25a, the rotation of said two levers 24, 25 being always synchronized and opposed in both directions of rotation by said means 24a.

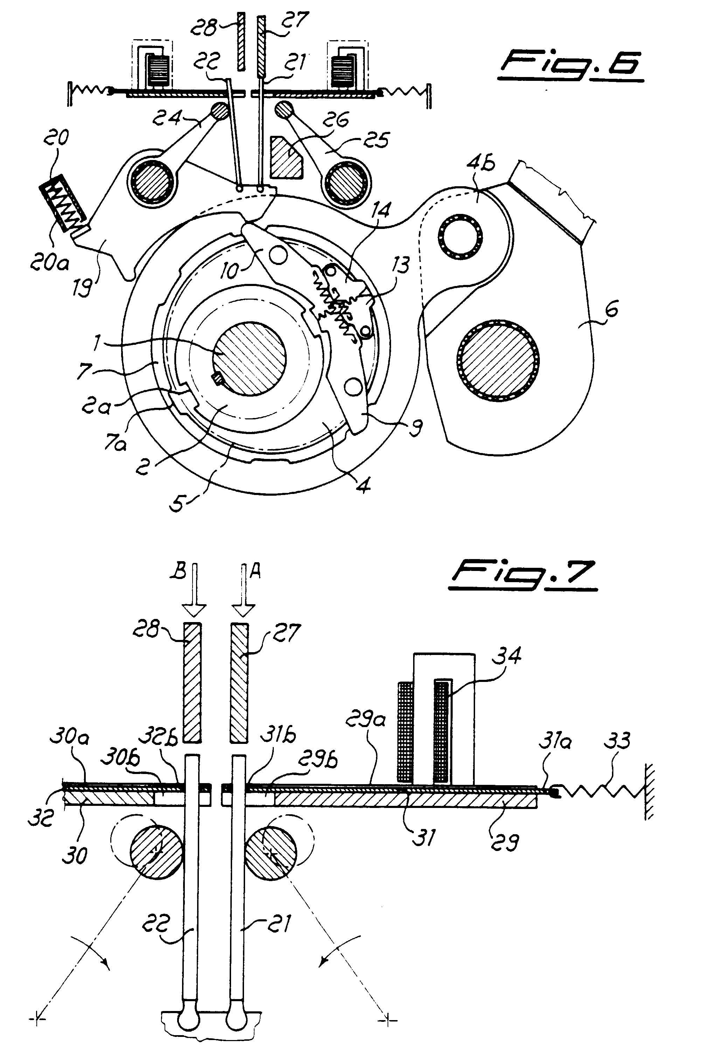

The rotation in the anticlockwise direction A of the selection lever 19 is limited by means of a fixed stop element 26, interposed between the two levers. As shown in the enlarged detail of Fig. 7, the programming actuation device 18 comprises actuation means for the levers 21, 22, composed basically of two pressure bars 27 and 28 governed, at each half-revolution, by actuators of known type and therefore indicated only schematically by the convention of two arrows A and B, and for convenience of description, corresponding to one direction of movement or the other; the device 18 is also completed by means for blocking in position the thrust rods 21, 22, composed of a pair of guides 29, 30, disposed on a plane substantially perpendicular to the levers 21, 22, said guides having a longitudinal groove 29a, 30a, in which a plate 31, 32 can slide, the outer end 31a, 32a of which is attached to elastic restoring means 33. The inner end of each plate 31, 32 is furthermore provided with a hole 31b, 32b, having a diameter slightly larger than the diameter of the levers 21, 22, and coaxial with an aperture 29b, 30b, formed on the inner end of each guide 29, 30. The arrangement of the apertures 29b, 30b and of the holes 31b, 32b is such as to allow passage of the upper free end of the rods 21, 22 and entraining of the plate 31, 32 during the rotation of said rods, from a position inclined a few degrees outwards to a vertical position, and vice versa, according to a manner of functioning that will be described below.

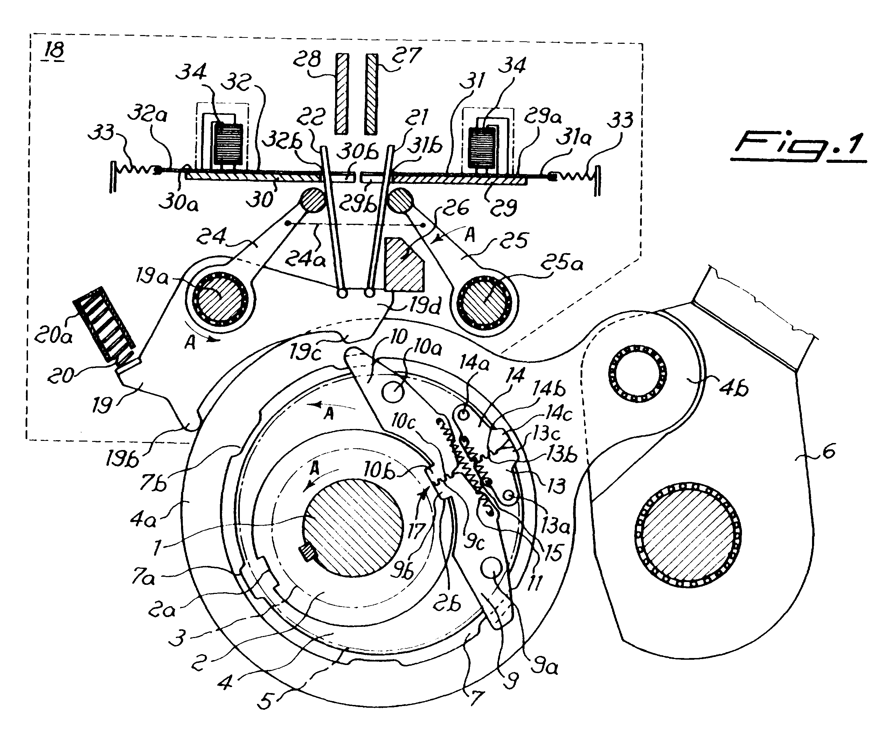

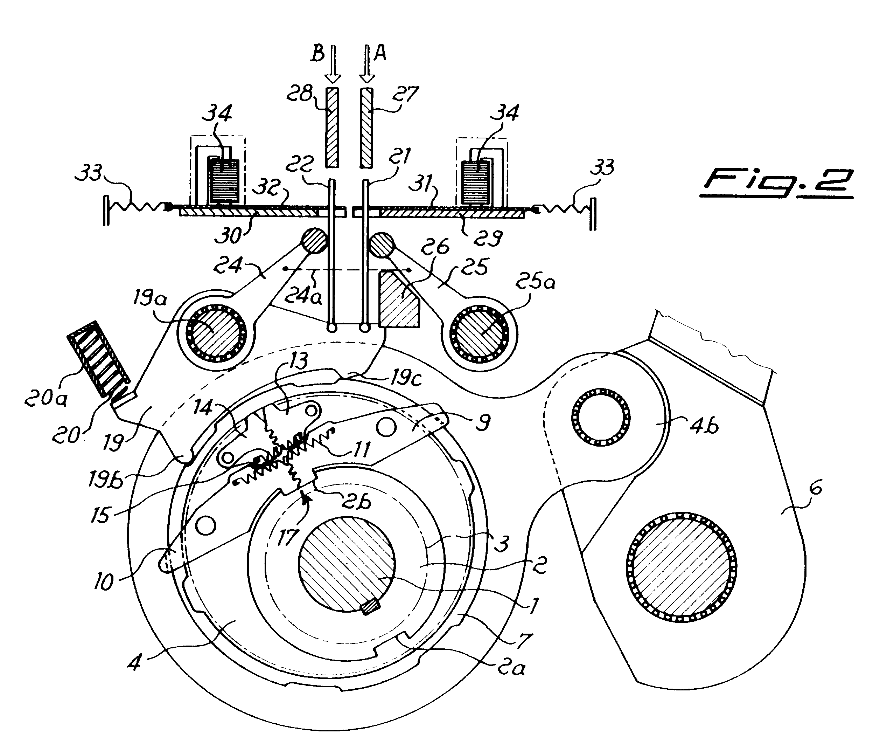

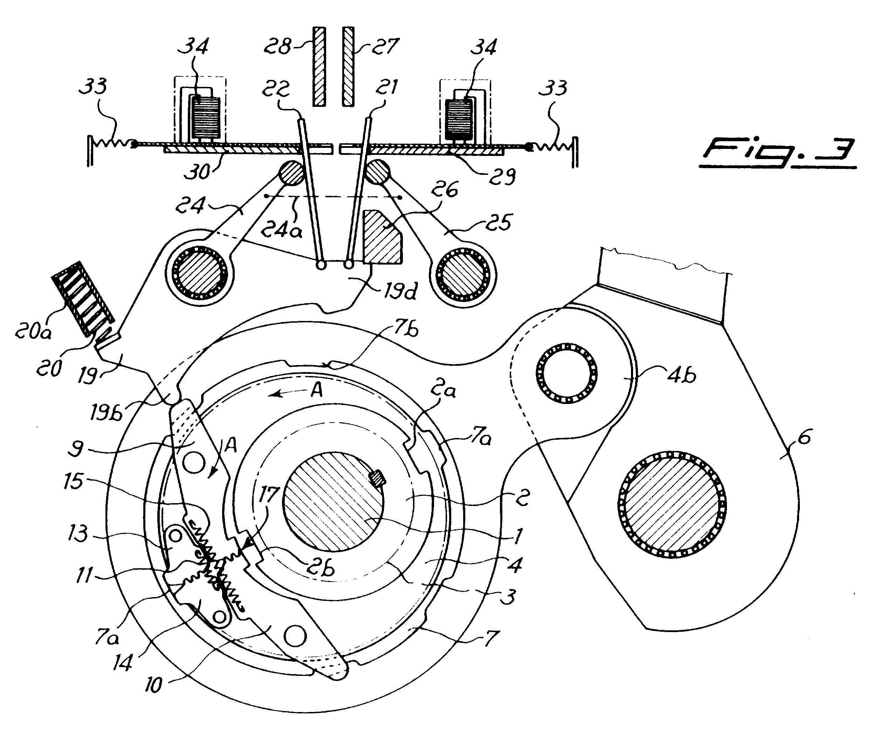

A blocking in vertical position of the rods 21, 22 is effected by means of an electromagnet 34 which, when energized, blocks the plate 31, 32 in position, which therefore in turn holds the rod 21, 22 in the vertical position. In the description below, the functioning of the device will be seen starting from the configuration of Fig. 1, which for convenience of description will be assumed as starting position, in which the frame is raised and the eccentric 4 is held keyed to the shaft 1 by engagement of the levers 9, 10 with the disc 2, for the purpose of causing change in position of the frame in the half-revolution. With reference to Figure 1, the electromagnets 34 are de-energized, the plates 31, 32 are both restored by the springs 33, the rods 21, 22 are moved apart and the selection lever 19, under the action of the thrust spring 20, has its end 19b rotated inwards and the end 19c rotated outwards into bearing against the stop element 26. When the shaft starts the half-revolution in the anticlockwise direction A, the control device for the dobby is already ready, during the half-revolution in progress, to be programmed for the next half-revolution so that, as long as the disc 4 is executing its half-revolution (Fig. 2), an actuator causes the levers 24, 25 to rotate inwards; the rotation of the levers 24, 25 causes a corresponding rotation of the thrust rods 21, 22, with consequent entrainment in translation of the plates 31, 32 against the restoring action of the springs 33, as far as the vertical position, coaxial with the pressure bars 27, 28.

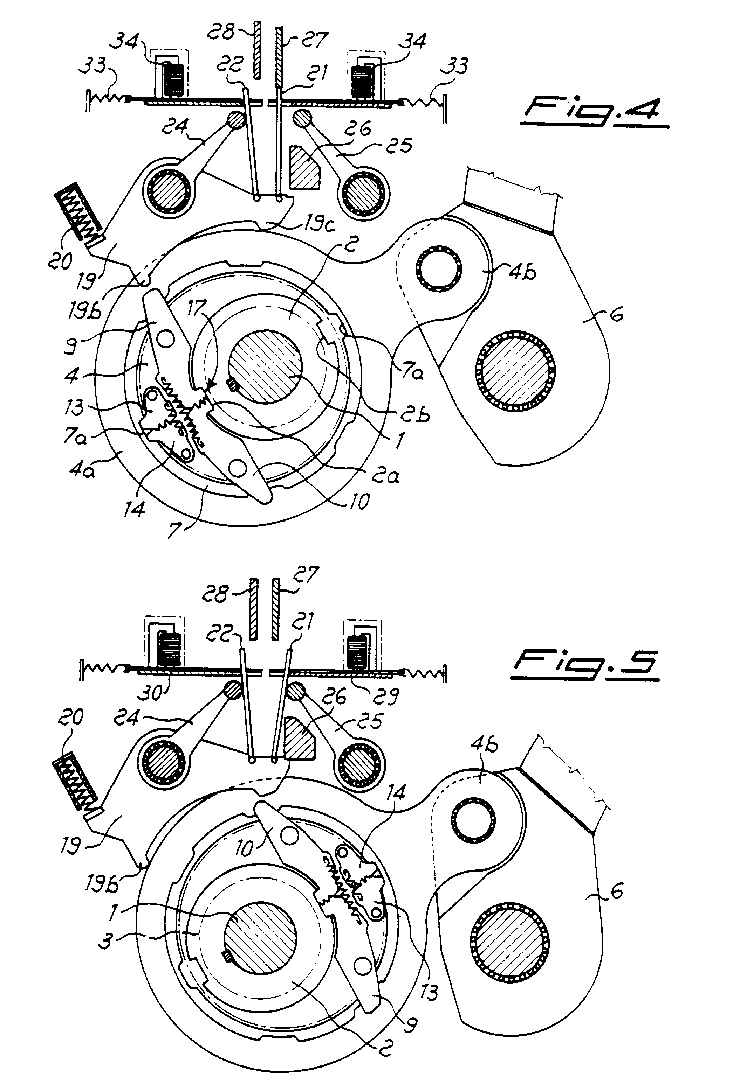

At this point, the true and proper programming takes place, and in fact the operating sequence may, as an alternative, provide for the next half-revolution or the holding of the position of the frame (raised or lowered) which has taken place in the half-revolution in progress, or the variation of same. If, as represented in Figure 3, for the next half-revolution holding of the position of the frame adopted in the half-revolution in progress is required, and therefore the disengagement of the coupling levers 9, 10 from the disc 2 so that the disc 4 shall rotate idling with respect to the shaft 1, it will be sufficient to restore the levers 24, 25 to the initial position, by not energizing the magnets 34, and in this way the plates 31, 32 are free to return to the initial position under the restoring action of the springs 33, entraining in rotation the rods 21, 22 into the initial, diverged position, so that they do not receive the thrust from the thrust bars 27, 28 and allow the selection lever 19 to maintain its inwardly rotated position as a result of thrust exerted by the spring 20.

In these conditions, when the shaft 1 continues its rotation and before it arrives at the end of the half-revolution, the end of the coupling lever 9 strikes against the end 19b of the selection lever 19, thus causing rotation in the anticlockwise direction A of the coupling lever 9, and therefore of the lever 10 coupled to it, with consequent disengagement of the tooth 17 from the seating 2b and allowing the disc 4 to rotate freely relative to the shaft 1. As will be evident from Fig. 3, said disengagement is completed at the instant at which the levers 13, 14, under the thrust of the levers 9, 10, engage into the seating 7a of the ring 7, or at the end of the half-revolution in progress and therefore, the programming for the next half-revolution having already been effected, the shaft can continue its travel, without needing to make any stops to allow the relative programming for the succeeding half-revolution, thereby avoiding loss of useful time and the need for high forces to start up again the control device from the stopped position. When, instead, the processing in progress requires a new change of position of the frame for the half-revolution following that in progress (Fig. 4), that is to say another half-revolution with the disc 4 keyed to the shaft 1 and therefore the coupling levers 9, 10 engaged into the seating 2b, and if, as assumed, the machine is continuing in normal forward motion, the actuator actuates the levers 24, 25, which bring the rods 21, 22 into the vertical position; at this point, in order to maintain this condition, it is necessary to energize the electromagnets 34, which blocks the plate 31 in position, thus keeping the thrust rod 21 in the vertical position, while the rod 22 returns to the initial position, because the corresponding electromagnet 34 for backward movement is not energized Next, the pressure bars 27, 28 are pressed downwards, causing the thrust rod 21 to descend, which in turn causes rotation of the selection lever 19 outwards against the thrust action of the spring 20, which becomes compressed in its seating 20a, as can be seen from Fig. 4, where it will be noted that the upper end 19d has moved away from the blocking element 26. Said rotation of the lever 19 causes the end 19b to move away from the path of the end of the lever 10, and therefore the levers 9, 10 remain engaged with the tooth 17 in the notch 2b, causing a variation in the position of the frame at the next revolution. In this case also, when the shaft has completed its half-revolution, the control device is already programmed for the next half-revolution and therefore it is possible to continue the cycle without the need to stop the shaft.

As can be seen from the figures and from the foregoing description, both types of programming have been carried out starting from an initial position (Fig. 1) with levers 9, 10 disposed (as seen in the Figure) to the right. It will, however, be readily understood by the person skilled in the art that an identical sequence would be carried out if the position considered as initial were that with the coupling levers 9, 10 disposed at the left (Figures 4, 5, 6), in which case the only variation would be that the selection action would be performed by the end 19c (instead of 19b), which would act upon the free end of the lever 9 (instead of 10), all the other sequential movements remaining unchanged. In particular, Fig. 5 shows the case of a further change of position of the frame in the succeeding half-revolution, corresponding therefore to Fig. 2; Fig. 6 shows, in contrast, the programming of a half-revolution with the frame held in the same position as the preceding half-revolution, and therefore corresponding to Fig. 3.

As can be seen from the foregoing description, it is also possible to select and to act independently only on one of the two rods corresponding, respectively, to the programming of movement in one direction or the other, in particular allowing an independent phasing of the two thrust bars, which will be brought into phase separately on the phase diagram for the dobby for forward travel or for backward travel, in this way making possible backward return, in the case of breakage of the thread, without the operator needing to make the dobby execute idling half-revolutions to regain the pitch with the broken weft. Furthermore, for the programming of the next half-revolution, it is necessary to energize only the blocking electromagnet 34 corresponding to the thrust bar associated with the one direction of travel in progress, forwards or backwards, in this way making possible a notable saving of energy and reduction of wear of the electromechanical components.

A further advantage of a programming actuation device according to the present invention consists in the fact that no sticking effect is created by the sliding of the positioning and blocking plates beneath the electromagnets, in this way making possible the use of ordinary, low-viscosity lubricating oils, which allow a high loading capacity of the machine.

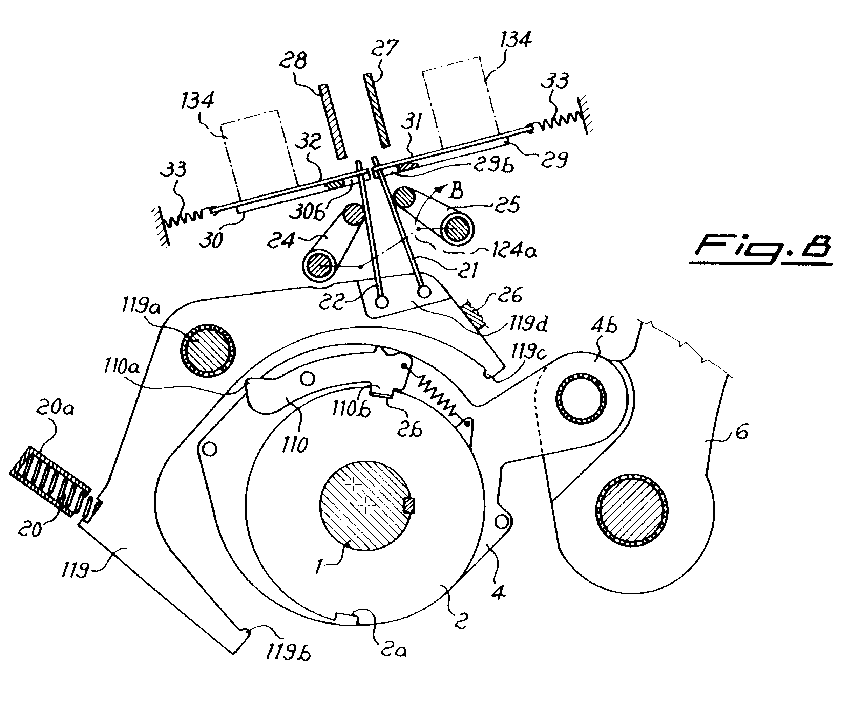

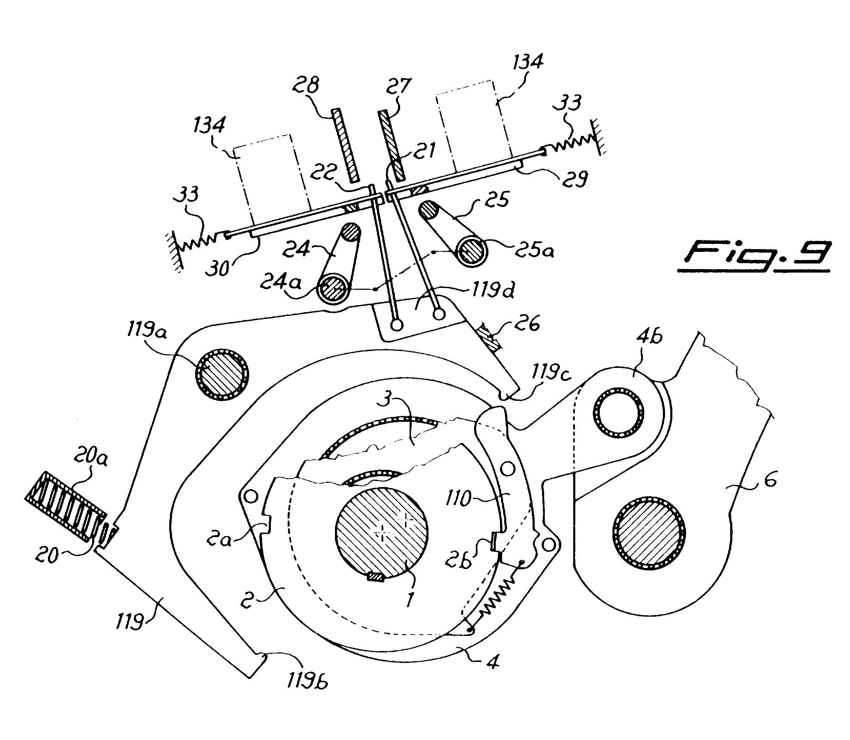

Numerous variants of a constructional nature may be introduced without thereby departing from the scope of the invention in its general characteristics, and in particular Figures 8 and 9 illustrate a variant device according to this invention, applied to a dobby of different type.

In this case, the lever 110 for engagement with the disc 2 is single, the selection lever 119 has a substantially inverted C-shape, and the electromagnets are of the permanent magnet type, which exert a continuous magnetic actuation, which is neutralized by the passage of current.

The functioning of the device is consequently slightly varied; in fact (Fig. 8) in at-rest conditions, the dobby and the actuation device have their transverse levers 24, 25 rotated, by means of lever mechanisms indicated schematically at 124a, into the inwardly closed position to bring the thrust rods 21, 22 closed into a substantially vertical position, the plates 31, 32 held in the corresponding position, translated inwards against the restoring action of the springs 33 by the magnetic field of the permanent magnets 134, the pressure bars 27, 28 being raised in waiting to carry out the selection.

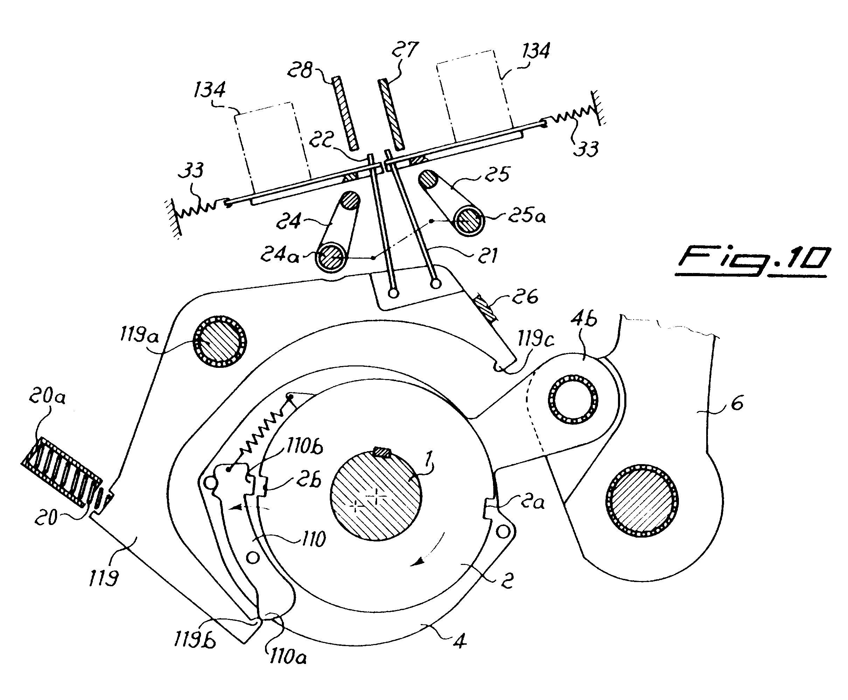

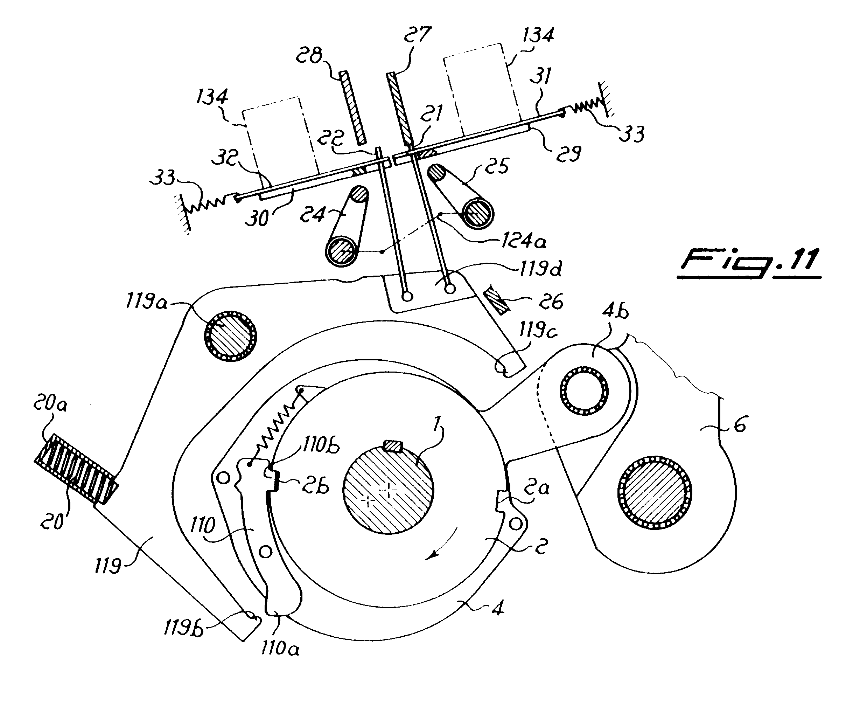

During the half-revolution of the disc 2 and in proximity to the dead point, the transverse levers 24, 25 are opened apart and, depending upon the programming carried out, one of the following two cases occurs:
A) It is not desired to vary the previous position of the frame: it is therefore necessary to disengage the lever 110 from the notch 2b; in this case (Fig. 8) electric current is supplied to the magnet 134 (corresponding for example to the commands for forward motion), thus neutralizing the magnetic field for holding the plate 29, so that the latter is made free to slide backwards restored by the spring 33, entraining with it in rotation the thrust rod 21, the free end of which becomes aligned with the pressure bar 27.
   The programmed lowering of the pressure bar 27 imparts a thrust action to the rod 21 which, in turn, causes rotation of the selection lever 119, bringing its free end 119c into the path of movement of the lever 110, with which it comes into contact, thus modifying its state.
   In the opposite configuration, in contrast (Fig. 10), in order to disengage the lever 110 it is necessary to cause the end 119b to come into contact with the end 110a and therefore it is necessary to maintain the electromagnetic field of the electromagnet 134, so that the rod 21 shall be held out of alignment from the pressure bar 27; in this way the lever 119 is not caused to rotate and the end 119b becomes situated along the path of the end 110a thereby causing, at the completion of the half-revolution, rotation in the anticlockwise direction of the lever 110 with consequent uncoupling of it from the disc 2.
B) It is desired to modify the preceding position of the frame: in this case (Fig. 9) it is sufficient not to supply electric current to the magnet, which holds the magnetic field active, thus holding the plate 31 in position, in which conditions the thrust rod 21 remains in the position out of alignment from the pressure bar 27 which, descending, does not exert any active effect; the end 119b of the selection lever 119 therefore remains in the preceding conditions outside the path of the end 110a of the lever 110, which remains coupled to the rotating disc 2.
   In the opposite configuration (Fig. 11), in order to cause the end 119b to remain outside the path of the end 110a, it is necessary, in contrast, to supply electric current to the electromagnet 134 in order to neutralize the magnetic field, so that the rod 21, under the restoring action of the spring 33, shall be brought into alignment with the pressure bar 27, to receive the thrust action to be transmitted to the lever 119 which, in this way, rotates clockwise, bringing its end 119b out of the path of the end 110a, as desired.

## Claims

1. Actuation device for the programming of rotary dobbies for actuating heddles frames in looms, comprising a rotating shaft (1), lever means (9, 10, 110), firmly pivoted on a rotating eccentric ring (4), one free end (9, 10b, 110b)of said lever means being adapted for engaging with a rotating disc (2), said actuation device comprising selection lever (19; 119) rotatable about a fixed pivot (19a; 119a) under the action exerted by pressure bars (27, 28) acting on first rigid thrust means (21, 22) articulated to one end of said selection means (19; 119) and in opposition to the action applied in the opposite direction by second thrust means (20), fixed to the opposite end of said selection means (19; 119) with respect to the pivot point (19a; 119a), for the purpose of positioning projections (19b, 19c; 119b, 119c) of the said selection lever (19; 119) along - or outside - the path followed by the outer end of the lever means (9, 10, 110) during one half-revolution of the ring (4) and with which to come - or not to come - into contact for the purpose of determining - or not determining - a rotation of the lever (9, 10, 110) such as to cause - or not to cause - the engagement of its ends (9b, 10b, 110b) with the rotating disc (2) for the purpose of determining - or not determining - the variation in the position of the frame, said pivoting of the selection lever (19, 119) being effected during the rotation of the shaft (1) and being maintained by positioning (24, 25) and blocking (31, 32, 34; 134) means associated with said first rigid thrust means (21, 22) characterized in that said positioning means for said thrust rods (21, 22) are composed of a pair of levers (24, 25) each one rotatable about a relative fixed pivot (19a, 24a, 25a), said rotation being always synchronized and in opposite directions, and in that said first rigid thrust means are comprised of a pair of levers (21, 22) independent one another, pivoted on one end of said selection means (19; 119) and operable in translation along a substantially radial direction through relative opening (29b, 30b) of a pair of rectilinear guides disposed substantially perpendicularly to the rods (21, 22), and cooperating with relative blocking means composed of a plate (31, 32) slidable in said guides (29, 30) against the restoring action of elastic means (33) and held in position by electromagnetic means (34; 134), appropriately energized, said combination making it possible to carry out the programming of the dobby for the next half revolution during the half revolution in progress, without stopping the control shaft (1) and placing said thrust rods in phase one independently from the other in relation to one or the other direction of motion.

2. Actuation device for the programming of rotary dobbies according to Claim 1, characterized in that the blocking means (31,32,34,134) are comprised of a fixed electromagnet (34, 134) and a plate (31, 32) which is pulled upwards with a rotation about the pivot point composed of the attachment to said elastic means (33), to effect blocking of the plate.

3. Actuation device for the programming of rotary dobbies according to Claim 1, characterized by the fact that said electromagnet (34) is of the coil type, capable of being activated by energizing of the coil, and the thrust rods are, when at rest, in a preferably diverged position.

4. Actuation device for the programming of rotary dobbies according to Claim 1, characterized in that said electromagnet (134) is of the permanent magnet type, the electromagnetic field of which is de-activated by the supply of electric current, and the thrust rods are, when at rest, preferably positioned convergent.

5. Actuation device for the programming of rotary dobbies according to claim 1 characterized in that said selection lever (19, 119) is made in one piece.

## Patentansprüche

1. Betätigungsvorrichtung für die Programmierung von Rotationsschaftmaschinen für die Betätigung von Litzenrahmen in Webmaschinen, aufweisend eine Drehwelle (1), eine Hebeleinrichtung (9, 10; 110), die sicher an einem sich drehenden exzentrischem Ring (4) schwenkbar ist, wobei ein freies Ende (9, 10b; 110b) der Hebeleinrichtung angepaßt ist, um mit einer Drehscheibe (2) in Eingriff zu kommen, wobei die Betätigungsvorrichtung aufweist einen Auswahlhebel (19; 119), der drehbar ist um einen festen Schwenkpunkt (19a; 119a) unter der Wirkung, die ausgeübt wird durch Druckstäbe (27, 28), welche auf eine erste steife Schubeinrichtung (21, 22) wirken, die angelenkt ist an einem Ende der Auswahleinrichtung (19; 119) und entgegengesetzt zu der Wirkung, die aufgebracht wird in der entgegengesetzten Richtung durch eine zweite Schubeinrichtung (20), welche an dem entgegengesetzten Ende der Auswahleinrichtung (19; 119) bezüglich des Schwenkpunktes (19a; 119a) befestigt ist, und zwar zum Zwecke der Positionierung von Vorsprüngen (19b, 19c; 119b, 119c) des Auswahlhebels (19; 119) entlang - oder außerhalb - des Pfades, gefolgt durch das Außenende der Hebeleinrichtung (9, 10; 110) während einer Halbumdrehung des Ringes (4), um mit diesem in Kontakt - oder nicht in Kontakt - zu kommen zum Zwecke der Bestimmung - oder Nicht-bestimmung - einer Drehung des Hebels (9, 10, 110), um den Eingriff seiner Enden ( 9b, 10b, 110b) mit der Drehscheibe (2) zu veranlassen - oder nicht zu veranlassen - zum Zwecke der Bestimmung - oder Nicht-bestimmung - einer Variation der Position des Rahmens, wobei die Verschwenkung des Auswahlhebels (19, 119) bewirkt wird während der Drehung der Welle (1) und aufrechterhalten wird durch eine Positionier-(24, 25) und Blockier- (31, 32, 34; 134) Einrichtung, die mit der ersten steifen Schubeinrichtung (21, 22) verbunden ist, dadurch gekennzeichnet, daß die Positioniereinrichtung für die Schubstäbe (21, 22) gebildet ist aus einem Paar von Hebeln (24, 25), wobei jeder drehbar ist um einen relativ festen Schwenkpunkt (19a, 24a, 25a), und die Drehung immer synchronisiert ist und in entgegensetzter Richtung ist und daß die erste steife Schubeinrichtung gebildet wird aus einem Paar von Hebeln (21, 22), die unabhängig voneinander sind, schwenkbar an einem Ende der Auswahleinrichtung (19; 119) angelenkt ist und betriebsfähig ist in Translation längs einer im wesentlichen radialen Richtung durch eine relative Öffnung (29b, 30b) eines Paares von geradlinigen Führungen, die im wesentlichen senkrecht zu den Stäben (21, 22) angeordnet sind, und mit einer relativen Blockiereinrichtung zusammenwirken, die gebildet ist aus einer Platte (31, 32), welche gleitfähig ist in den Führungen (29, 30) gegen die Rückstellwirkung einer elastischen Einrichtung (33) und gehalten wird in Position durch eine elektromagnetische Einrichtung (34; 134), die geeignet eingeschaltet wird, wobei die Kombination es ermöglicht, die Programmierung der Schaftmaschine für die nächste Halbumdrehung durchzuführen, während der laufenden Halbumdrehung, ohne Stoppen der Steuerwelle (1) und Stellen der Schubstäbe in Phase unabhängig voneinander in Relation zu der einen oder der anderen Bewegungsrichtung.

2. Betätigungsvorrichtung für die Programmierung von Rotationsschaftmaschinen gemäß Anspruch 1, dadurch gekennzeichnet, daß die Blockiereinrichtung (31, 32, 34, 134) gebildet ist aus einem festen Elektromagneten (34, 134) und einer Platte (31, 32), die aufwärtsgezogen wird mit einer Drehung um den Schwenkpunkt, gebildet durch die Befestigung an der elastischen Einrichtung (33), um die Blockierung der Platte zu bewirken.

3. Betätigungsvorrichtung für die Programmierung von Rotationsschaftmaschinen gemäß Anspruch 1, dadurch gekennzeichnet, daß der Elektromagnet (34) von dem Spulentyp ist, in der Lage ist, aktiviert zu werden durch Einschalten der Spule, und die Schubstäbe, wenn in Ruheposition, in einer bevorzugt auseinandergezogenen Position sind.

4. Betätigungsvorrichtung für die Programmierung von Rotationsschaftmaschinen gemäß Anspruch 1, dadurch gekennzeichnet, daß der Elektromagnet (134) von dem Permanentmagnet-Typ ist, dessen elektromagnetisches Feld deaktiviert wird durch die Zufuhr von elektrischem Strom und die Schubstäbe, wenn in Ruhe, bevorzugt zusammengezogen positioniert sind.

5. Betätigungsvorrichtung für die Programmierung von Rotationsschaftmaschinen gemäß Anspruch 1, dadurch gekennzeichnet, daß der Auswahlhebel (19, 119) in einem Stück gemacht ist.

## Revendications

1. Dispositif d'actionnement pour la programmation de ratières rotatives pour l'actionnement de cadres de lisse dans des métiers à tisser comprenant un arbre tournant (1), des moyens à levier (9, 10 ; 110) fermement articulés sur une couronne excentrique tournante (4), une extrémité libre (9, 10b ; 110b) desdits moyens à levier étant prévue pour s'engager avec un disque tournant (2), ledit dispositif d'actionnement comprenant un levier de sélection (19 ; 119) pouvant tourner autour d'un pivot fixe (19a ; 119a) sous l'action exercée par des barres de pression (27, 28) agissant sur de premiers moyens rigides de poussée (21, 22) articulés à une extrémité desdits moyens de sélection (19 ; 119) et en opposition à l'action appliquée dans la direction opposée par de seconds moyens de poussée (20), fixés à l'extrémité opposée desdits moyens de sélection (19 ; 119) par rapport au point formant pivot (19a ; 119a), dans le but de mettre en place des éléments en saillie (19b, 19c ; 119b, 119c) dudit levier de sélection (19 ; 119) le long - ou à l'extérieur - du trajet suivi par l'extrémité externe des moyens à levier (9, 10 ; 110) pendant une demi-révolution de la couronne (4) et pour venir - ou ne pas venir - en contact dans le but de déterminer - ou de ne pas déterminer - une rotation du levier (9, 10 ; 110) de manière à provoquer - ou ne pas provoquer - l'engagement de ces extrémités (9b, 10b ; 110b) avec le disque tournant (2) dans le but de déterminer - ou de ne pas déterminer - la variation dans la position du cadre, ledit pivotement du levier de sélection (19 ; 119) étant effectué au cours de la rotation de l'arbre (1) et étant maintenu par des moyens de mise en place (24, 25) et de blocage (31, 32, 34 ; 134) associés auxdits moyens rigides de poussée (21, 22) caractérisé en ce que lesdits moyens de mise en place pour ladite tige de poussée (21, 22) sont composés d'une paire de leviers (24, 25) dont chacun peut tourner autour d'un pivot fixe correspondant (19a, 24a, 25a), ladite rotation étant toujours synchronisée et dans des directions opposées, et en ce que lesdits premiers moyens rigides de poussée sont composés d'une paire de leviers (21, 22) indépendant l'un de l'autre, articulés sur une extrémité desdits moyens de sélection (19 ; 119) et pouvant être actionnés en translation le long d'une direction sensiblement radiale à travers une ouverture correspondante (29b, 30b) d'une paire de guides rectilignes disposés de manière sensiblement perpendiculaire aux tiges (21, 22) et coopérant avec des moyens de blocage correspondant composés d'une plaque (31, 32) pouvant coulisser dans lesdits guides (29, 30) à l'encontre de l'action de rappel de moyens élastiques (33) et maintenus en place par des moyens électromagnétiques (34 ; 134), mis sous tension de manière appropriée, ladite combinaison faisant qu'il est possible d'effectuer la programmation de la ratière pour la demi-révolution suivante au cours de la demi-révolution en cours, sans arrêter l'arbre de commande (1) et placer lesdites tiges de poussée en phase l'une indépendamment de l'autre en relation d'une direction de déplacement ou de l'autre.

2. Dispositif d'actionnement pour la programmation de ratières rotatives selon la revendication 1, caractérisé en ce que les moyens de blocage (31, 32, 34, 134) sont composés d'un électro-aimant fixe (34, 134) et d'une plaque (31, 32) qui est tirée vers le haut avec une rotation autour du point formant pivot composé de la fixation desdits moyens élastiques (33), afin d'effectuer le blocage de la plaque.

3. Dispositif d'actionnement pour la programmation de ratières rotatives selon la revendication 1, caractérisé par le fait que ledit électro-aimant (34) est du type à bobine, capable d'être rendu actif par mise sous tension de la bobine, et les tiges de poussée sont, au repos, dans une position de préférence divergente.

4. Dispositif d'actionnement pour la programmation de ratières rotatives selon la revendication 1, caractérisé en ce que ledit électro-aimant (134) est du type à aimant permanent, le champ électromagnétique de celui-ci étant rendu inactif par l'amenée d'un courant électrique, et les tiges de poussée sont, au repos, dans une position de préférence convergente.

5. Dispositif d'actionnement pour la programmation de ratières rotatives selon la revendication 1, caractérisé en ce que ledit levier de sélection (19, 119) est réalisé d'une seule pièce.
